# EUROPEAN PATENT APPLICATION

(11) **EP 3 324 028 A1**
(43) Date of publication of application: **23.05.2018**
(21) Application number: 16199260.7
(22) Date of filing: 17.11.2016
(51) Int. Cl.: F02K 9/42, F02K 9/58

(54) **THRUSTER FOR LIQUID LOW-TEMPERATURE STORABLE PROPELLANT BLENDS AND METHOD OF STARTING A THRUSTER**

(71) Applicant: ECAPS Aktiebolag, 171 04 Solna (SE)
(72) Inventor: ANFLO, Kjell, 136 73 HANINGE (SE)
(74) Representative: Brann AB

(57) **Abstract**

The subject invention generally relates to thrusters for ADN or HAN based liquid propellants. More particularly the invention relates to a thruster for a low-temperature stable ADN or HAN based liquid monopropellant and a method of starting such thruster, wherein the thruster includes upstream of the inlet valve seat of the flow control valve an in-line propellant reservoir for holding a predefined volume of the propellant reservoir is configured to be capable of being preheated by electrical heating means, preferably by the valve's nominal heater. The invention also relates to a propulsion system including the inventive thruster. The inventive thrusters and propulsion systems are primarily intended for use in 1) aerospace applications for orbit raising, orbit manoeuvres and maintenance, attitude control and deorbiting of spacecraft, and/or 2) propellant settling, attitude and roll control of missiles, launchers and space systems.

## Description

### Field of the invention

The subject invention generally relates to thrusters i.e. chemical rocket engines for ionic liquid storable propellants, such as ADN or HAN based liquid storable propellants. More particularly the invention relates to a thruster for a low-temperature ADN or HAN based liquid propellant and a method of starting such thruster, wherein the thruster includes, upstream of the inlet valve seat of the flow control valve, an in-line propellant reservoir for holding a predefined volume of the propellant which reservoir is configured to be capable of being preheated by electrical heating means, preferably by the flow control valve's nominal heater. The invention also relates to a propulsion system including the inventive thruster. The inventive thrusters and propulsion systems are primarily intended for use in 1) aerospace applications for orbit raising, orbit maneuvers and maintenance, attitude control and deorbiting of spacecraft, and/or 2) propellant settling, attitude and roll control of missiles, launchers and space systems.

### Background of the invention

New mission requirements for propulsion systems not only include good propulsive performance but also lower cost, shorter production lead time, high manufacturing rates etc.

Liquid propellant blends based on Ammonium DiNitramide (ADN) can be formulated so that that they achieve different characteristics. This also applies to propellant blends based on hydroxyl ammonium nitrate (HAN).

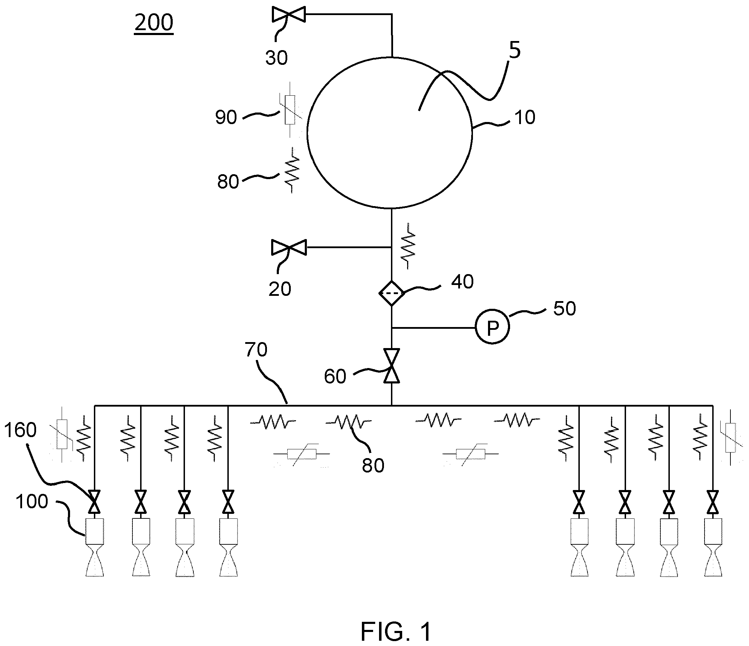

The state of the art storable high performance monopropellant LMP-103S is a blend of 63.00% ADN, 18.41% methanol, 4.65% ammonia, and 13.94% water (percentages are by weight). LMP-103S has a saturation temperature of -7°C, meaning that ADN may form a slurry at and below this temperature. Therefore all fluid components and lines containing pro-pellant in the propulsion system, e.g. the flow control valve (FCV), must be thermally controlled, i.e. heated during the mission. Propellant feed lines extending from a propellant tank to a thruster contained in a propulsion system, such as shown in **FIG. 1**, may typically have a length of several meters. Such propellant feed lines in a propulsion system are typically required to be heated to a temperature of at least 10°C.

WO 2012/166046 discloses ADN based propellant blends having reduced saturation temperature. For example, WO 2012/166046 discloses in Example 3 an ADN based propellant blend comprising 56.7% of ADN, 13.57% of methanol, 7.44% of ammonia, and 22.3% of water, having a saturation temperature of -30°C, or even lower. The specific impulse (Iₛₚ) is lower than that for LMP-103S but on par with that of hydrazine, and the density impulse of is still 20% higher than that for hydrazine.

An important advantage of such propellant blends is that the propellant can be stored and fed to the thrusters at significantly lower temperature than with LMP-103S, thus less thermal hardware and lower electric power consumption for the fluid components in the propulsion system would be required. Furthermore, lower cost thruster materials could be used due to the inherent lower combustion temperature of the propellant blend, and system complexity, mass, cost etc. could be reduced.

A drawback is that the lower inherent propellant energy, the lower propellant inlet temperature, and the combination of both, requires up to 100°C higher reactor preheating temperature (and higher electrical power) to achieve nominal starts.

The present inventors have found that the use of low temperature stable propellants can lead to operational restrictions such as hard starts, combustion instabilities and reduced life for the current art thrusters.

Accordingly, it would be desirable to provide a thruster better apt for use with low-temperature stable propellants, such as disclosed in WO 2012/166046.

It would also be desirable to be able to minimize the reactor preheating temperature required to achieve nominal starts, especially with low-temperature stable propellants, such as disclosed in WO 2012/166046.

### Summary of the invention

The present inventors have found that by preheating a predefined volume of propellant upstream of the inlet valve seat of the flow control valve (FCV) of a thruster, a number of advantages can be achieved, and the thruster will be better apt for low-temperature propellant blends.

The inventive thruster will allow for a propellant having a lower temperature to be fed into the thruster propellant inlet **110**, thus reducing the heating requirements on upstream propellant lines and associated valves, and enabling taking advantage of low-temperature stable propellants.

Accordingly, propellants which can be used at lower temperatures than the current state-of-the-art propellants, i.e. lower than 0°C, will reduce the required power consumption, heater related thermal hardware and its mass, complexity and overall propulsion system cost for heating the propellant lines **70** between the tank and the thrusters. The thermal hardware comprises primarily heaters, thermistors **90**, thermal harness, thermal tape, thermal standoffs, electrical drivers, and thermistor monitoring circuits. The reduction of the subject thermal control hardware mass can be as much as 10% of the whole propulsion system mass, which is a significant weight reduction.

For a prior art thruster **100** of the preamble of claim 1 for a low-temperature stable ADN or HAN based liquid propellant, having a propellant inlet **110**, a reactor **120**, a propellant feed pipe **130**, a thruster flow control valve **160** for a liquid propellant having at least one valve seat **150** and electrical means **170** for heating the flow control valve, the advantages can be achieved by means of the characterizing features of claim 1, according to which a propellant reservoir **140** for holding a predefined volume of the propellant is provided upstream of the inlet valve seat of the flow control valve, which reservoir is configured so as to be capable of being preheated and takes the form of an elongated channel **180** of a certain length for holding said volume of propellant. The reservoir is configured to be capable of being preheated by the electrical heating means **170**. The channel is provided in-line with the propellant feed tube.

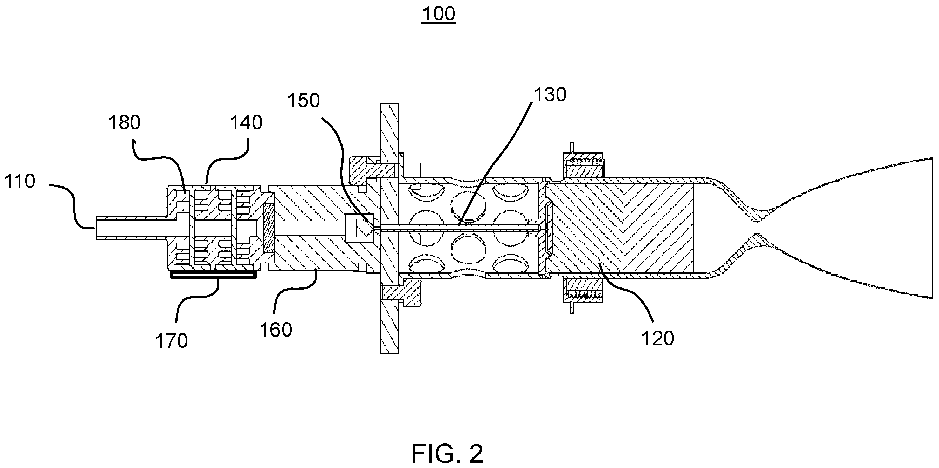

In one aspect the invention relates to the above thruster. An embodiment of the thruster **100** is shown in detail in **FIG. 2**.

The inventive thruster allows for a lower temperature of the propellant entering the propellant inlet **110** from the propellant feed line **70**, and allows for reduced warming of the pro-pellant feed lines **70** of a propulsion system, i.e. warming of the feed lines to a lower temperature than in the prior art. When a low-temperature stable propellant is being used, the inventive thruster allows for taking advantage of the stability of such propellant to a lower temperature, by virtue reducing the overall heating requirements of the propellant feed lines and of the propellant tank of a propulsion system including the inventive thruster. The inventive thruster also reduces undue cooling of the reactor, and thus reduces any tendency to hard starts of the thruster. As explained in WO 2016/167700 A1, for a given thruster hard starts may be experienced at certain combinations of Duty and T_{ON}. The inventive thruster allows for energy-efficient warming of a sufficient volume of propellant, while keeping the required volume of propellant to be preheated to a minimum.

Hence the inventive thruster can be operated with low temperature storable low-hazard liquid propellants without requiring higher reactor preheating temperature, nor requiring operational restrictions, nor exhibiting hard starts or combustion instabilities and having increased life as compared to current art thrusters. Due to the lower combustion temperature of a low temperature storable propellant having lower energy content, a thruster for such propellant can be fabricated from low cost materials using conventional machining.

The inventive thruster avoids the requirement of significantly increasing the preheating temperature of the reactor in order to achieve a nominal start when using a low-temperature storable propellant.

A reduced reactor preheating temperature will correspond to a lower preheating electrical power and/or shorter preheating time. Heating of an additional volume of propellant upstream of the inlet valve seat of the FCV will merely require a minimum of additional energy.

In a preferred embodiment heating of the inventive reservoir is accomplished by means of the FCV electrical heating means **170**. Accordingly, the inventive thruster does not require any additional heating means, and the FCV electrical heater can be used also for heating the reservoir. Accordingly, in a preferred embodiment the reservoir is provided with a nominal low power FCV electrical heater **170** for electrically heating both the channel and the FCV.

In yet a preferred embodiment the preheated propellant reservoir is integrated with the thruster FCV **160**.

In another aspect the invention relates to a propulsion system **200** including the inventive thruster. Such system will have a reduced heating requirement for propellant feed lines **70** connected to a thruster **100** of the invention comprised in such system.

In yet another aspect the invention relates to a spacecraft, satellite, or spaceplane including the inventive thruster **100**.

In yet an aspect the invention relates to a method of starting a thruster **100** for a low-temperature stable ADN or HAN based liquid propellant comprising the steps of: A) preheating reactor **120** to a certain preset temperature; B) preheating a flow control valve **160** of the thruster to a certain preset temperature; C) feeding via a propellant feed tube **130** a liquid propellant **5** into the preheated reactor for ignition and decomposition of the propellant; which method further comprises a step D) wherein a predefined volume of the propellant contained in a propellant reservoir **140** upstream of an inlet valve seat **150** of the flow control valve is preheated by electrical heating means **170** to a temperature of at least 10°C.

In a preferred embodiment of the method the electrical heating means **170** is preferably the flow control valve's **160** nominal electrical heater.

Further advantages and embodiments will be apparent from the following detailed description and appended claims.

The term "propulsion system" is used herein to denote the hydraulic architecture of the hardware and its components for the purpose of generating propulsive thrust of a spacecraft, launcher attitude control system etc., comprising propellant tank(s), pressurant tank(s), propellant and pressurant loading service valves, propellant and pressurant lines, isolation valve(s), propellant system filter(s), pressure transducer(s), thrusters/rocket engines and other mission specific fluid components required. An embodiment of such system **200** is schematically illustrated in **FIG. 1**.

### Brief description of the attached drawings

**FIGURE** 1 is a simplified hydraulic schematic representation of an embodiment **200** of a propulsion system, comprising a propellant tank **10**, a propellant service valve for fueling **20**, a pressurant service valve for pressurization **30**, a propellant filter **40**, a pressure transducer **50**, an isolation valve **60**, heaters **80** and thrusters **100** (i.e. chemical rocket engines) with an integrated propellant flow control valve (FCV) **160**.
**FIGURE 2** shows an embodiment **100** of the inventive chemical rocket engine comprising the propellant inlet to the thruster **110**, a propellant reservoir **140** which is integrated upstream with the FCV **160**.
**FIGURE 3** shows a detailed 2-D view of reservoir **140** shown in **FIG 2**, and a frontal view over the section **B-B.**
**FIGURE 4** shows a detailed exploded view of reservoir **140** shown in **FIG 2**.
**FIGURE 5** shows a detailed view of the propellant reservoir **140**, comprising an elongated channel **180** formed into a double winded coil comprising the preheated propellant **5.** The reservoir is illustrated by the propellant contained in the reservoir.

### Detailed description of the invention and preferred embodiments thereof

A flow control valve (FCV) typically contains one or two valve seats. An FCV having only one valve seat is typically referred to as a single-seat FCV. An FCV may also have two valve seats in series. Such configuration is provided for series redundancy against leakage. An FCV of a liquid propellant thruster is typically heated in order to maintain therein the minimum required propellant temperature for the propellant not to get saturated or to freeze, and for the valve seat or seats of the FCV to reliably perform their intended function. Accordingly, by virtue of the heating of the FCV the volume of propellant present in the FCV will also be heated.

The problem of hard starts and undue cooling of the reactor by the propellant being injected therein at certain combinations of duty and T_{ON} is known from WO 2016/167700 A1 and has been described therein.

The present inventors have found that the area of hard starts may be larger for a low-temperature stable propellant, such as disclosed in WO 2012/166046 A2, due to the lower specific energy of such propellant.

At certain combinations of duty and T_{ON}, also the FCV will similarly be prone to be cooled down by the propellant entering the FCV from the propellant feed line. This will lead to cooler propellant entering the reactor, thus aggravating the problem of undue cooling of the reactor. It has now been found that this problem can be alleviated by the heating of an additional volume of propellant in close proximity to the inlet valve seat of the FCV.

For improved efficiency the heated reservoir is preferably in thermal contact with the FCV. In a preferred embodiment the reservoir is heated by the FCV heater.

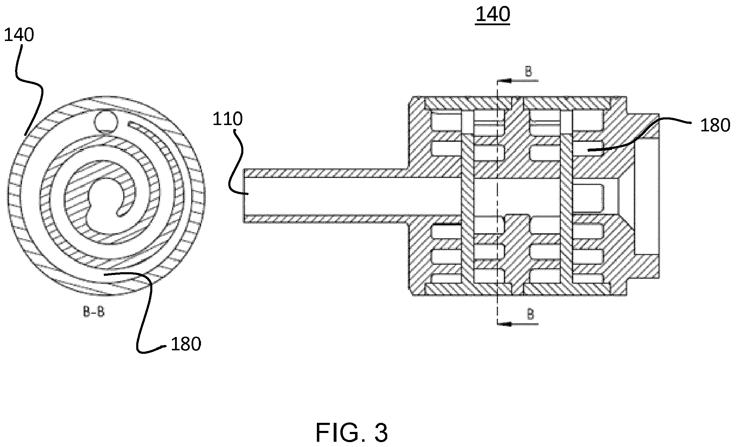

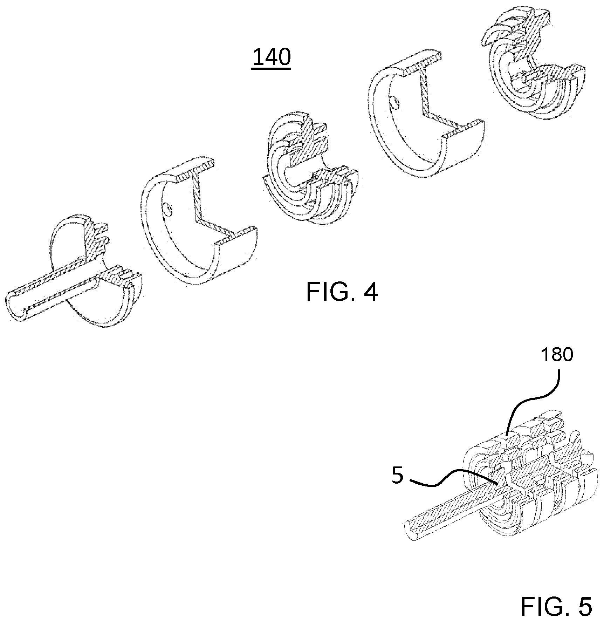

The inventive reservoir is formed from an elongated channel **180**. In order for the reservoir not to extend unduly in either direction, the channel is formed into a loop. As used herein the term "loop" is intended to include any form of the channel that will serve to reduce the overall dimensions of the inventive reservoir. The shape of the loop is not critical. The loop can exhibit any number of bends and stretches, and can take the form of e.g. a meander, helix, coil, the shape as shown in **FIGS 3****,** **4**, and **5**, or a combination thereof. The channel is provided in-line with the propellant feed tube.

In preferred embodiments of the invention the cross-sectional surface area of the channel of the reservoir may not exceed the critical cross-sectional surface area for the propellant in order to supress a detonation wave. As an example, in the case of a circular channel, the critical diameter for the propellant LMP-103S is 10 mm.

According to the invention low temperature liquid storable low-hazard monopropellants are used with the objective to significantly reduce thermal hardware and required electrical power, especially thermal hardware, such as heaters **80**, attached to propellant feed lines **70** of a propulsion system.

According to the invention the volume of the reservoir should preferably be sufficient to maintain the temperature of the propellant injected into the thruster's feed tube/injector at its nominal temperature until the heat from the combustion reactor has reached the upstream part of the reactor.

For example, for a 1 N thruster, such as shown in **FIG. 2**, it takes approximately 10 seconds in continuous firing mode before the heat from the combustion significantly heats the upstream part of the reactor, corresponding to a propellant volume of up to 4 cm³. Accordingly, for an FCV holding in itself 2 cm³ of propellant, the volume of the inventive reservoir should preferably be about 2 cm³. A 5 N thruster requires a preheated propellant volume of up to 18 cm³, and a 22 N thruster requires up to 80 cm³. For this reason it is believed that the inventive reservoir will not be practically feasible with larger engines, due to the increasingly added mass associated with the reservoir. For such larger engines the reservoir may be made separate from the FCV, and may be provided with separate heating means.

The combustion chamber of reactor **20** of the inventive engine is preferable fabricated from conventional refractory metals to withstand the high combustion temperatures, and using conventional machining.

A significant achievement of the invention to the art is the feasibility to significantly reduce the number of heaters and heater power, thus reducing mass, power, complexity and cost of the spacecraft.

In practice, prior to firing of the thruster, the propellant in the reservoir and in the FCV is typically heated to a nominal temperature of 20°C to 30°C simultaneously with the preheating of the reactor. When the reactor, the FCV, and the propellant reservoir have reached their respective required temperatures; 1) reactor temperature has reached approximately 350°C, and 2) the reservoir, and FCV temperature has reached above 20°C, the thruster is ready to be fired.

In a preferred embodiment of the inventive method the reservoir is heated by the FCV to a temperature of at least 10°C.

HAN-based propellant blends could be used in the same way as ADN-based propellant blends. Existing and well proven catalysts and catalyst beds currently used for the respective monopropellants can also be used with the present invention.

In a preferred embodiment of the invention a low temperature storable monopropellant blend like the one of Example 3 of WO 2012/166046, or similar, is used. A corresponding low temperature storable HAN based monopropellant could also be used. A thruster operated with the propellant of Example 3 of WO 2012/166046 has during hot firing tests on ground demonstrated a specific impulse on par with hydrazine thruster and having an improved density impulse with 20%, as compared to hydrazine.

With the inventive thruster an inlet **110** temperature of -10°C to -20°C of the propellant entering the thruster from the propellant feed line **70** can be used with a low-temperature storable liquid propellant, such as that of Example 3 of WO 2012/166046, or a similar propellant.

The inventive thruster is preferably a monopropellant thruster. It is however also conceivable to configure the thruster as a dual mode bipropellant thruster.

In instances wherein a plurality of thrusters are located in close proximity to each other, such as in a so-called "thruster cluster", the inventive reservoir could be provided as a plenum heater.

## Claims

1. A thruster (100) for a low-temperature stable ADN or HAN based liquid propellant, having a propellant inlet (110), a reactor (120), a propellant feed tube (130), a thruster flow control valve (160) for a liquid monopropellant having an inlet valve seat (150) and electrical means (170) for heating the flow control valve,
**characterized in** having, upstream of the inlet valve seat of the flow control valve, a propellant reservoir (140) for holding a predefined volume of the propellant, which reservoir is configured to be capable of being preheated by the electrical heating means (170), said reservoir being formed by an elongated channel (180) for holding the volume of liquid propellant, said channel being provided in-line with the propellant feed tube.

2. The thruster of claim 1, wherein the propellant reservoir is integrated with the thruster flow control valve.

3. The thruster of claim 1 or 2, wherein the reservoir is provided with a nominal low power FCV electrical heater (170) for electrically heating both the channel and the flow control valve.

4. The thruster of any one of the previous claims, wherein the elongated channel exhibits a cross-sectional area not exceeding the critical cross-sectional area for the propellant in order to suppress a detonation wave.

5. A propulsion system (200) including a thruster (100) of claim 1.

6. A spacecraft, satellite, or spaceplane including a thruster (100) of claim 1.

7. A method of starting a thruster (100) for a low-temperature stable ADN or HAN based liquid propellant comprising the steps of:
A) preheating a reactor (120) of the thruster to a certain preset temperature;
B) preheating a flow control valve (160) of the thruster to a certain preset temperature;
C) feeding via a propellant feed tube (130) a liquid propellant (5) from the flow control valve into the preheated reactor for ignition and decomposition of the propellant;
**characterized in** further comprising a step D) wherein an additional predefined volume of the propellant contained in a propellant reservoir (140) located upstream of an inlet valve seat (150) of the flow control valve is preheated by electrical heating means (170) to a temperature of at least 10°C.

8. The method of claim 7, wherein, in step D, the electrical heating means heats both the reservoir and the flow control valve

9. The method of claim 8, wherein, in step D, the additional predefined volume of propellant contained in a propellant reservoir (140) is preheated by the flow control valve's (160) nominal electrical heater (170).

10. The method of claim 8 or 9, wherein the propellant entering the flow control valve exhibits a temperature of less than 5°C, e.g. a temperature in the range of 0 to -20°C.
